# EUROPÄISCHE PATENTSCHRIFT

(11) **EP 1 045 139 B1**
(45) Veröffentlichungstag und Bekanntmachung des Hinweises auf die Patenterteilung: **08.06.2005**
(21) Anmeldenummer: 00107376.6
(22) Anmeldetag: 05.04.2000
(51) Int. Cl.: F03D 11/02

(54) **Windkraftanlage**
Wind turbine
Eolienne

(30) Priorität: 12.04.1999 DE 19916453
(43) Veröffentlichungstag der Anmeldung: 18.10.2000
(73) Patentinhaber: Winergy AG, 46562 Voerde (DE)
(72) Erfinder: Schoo, Alfred, Dr., 46397 Bocholt (DE); Klein-Hitpass, Arno, 46395 Bocholt (DE)
(74) Vertreter: Radünz, Ingo, Dipl.-Ing.

(56) Entgegenhaltungen:
- EP-A- 0 811 764
- EP-A- 0 821 161
- WO-A-96/11338
- GB-A- 2 002 488
- US-A- 4 329 117

## Beschreibung

Die Erfindung betrifft eine Windkraftanlage mit den Merkmalen des Oberbegriffes des Patentanspruches 1.

Die ökologischen und ökonomischen Anforderungen an moderne Windkraftanlagen werden immer höher. Die Ökonomie verlangt, daß neben einer kompakten Leichtbauweise auch eine wirtschaftliche Installation, Reparatur und Wartung der Anlage gegeben ist. Besonders im Offshore-Bereich ist der Installationsaufwand einer Anlage, z. B. durch die Verwendung von Schiffskranen oder Hubschraubern, sehr kostenintensiv. Desweiteren sind aus ökologischen Gründen die Geräuschemissionen bei Onshore-Anlagen zu minimieren. Dies erfordert eine vollständige Entkopplung der einzelnen Komponenten.

Der Antriebsstrang bekannter Windkraftanlagen (EP-OS 635 639) setzt sich zusammen aus den Rotorblättern mit der Rotornabe, der Rotorwelle mit der Rotorlagerung, einem mehrstufigen Planeten-Stirnradgetriebe, einer mechanischen Bremse, einer Kupplung und einem Generator. Die Rotorblätter sind mit der Rotornabe verbunden und treiben eine Rotorwelle an. Diese ist in einem großen Wälzlager aufgenommen, das über einen Maschinenrahmen und mit dem Azimutlager verbunden ist. Auf diese Weise werden die am Rotor angreifenden Windkräfte in den Turm eingeleitet. Diese Lagerung erfordert einen Wellenabschnitt zwischen dem Rotor und dem Getriebe. Das zweite Rotorwellenlager wird von dem Getriebe gebildet, dessen Antriebshohlwelle über eine Schrumpfscheibe mit der Rotorwelle verbunden ist. Das Getriebe stützt sich über eine doppelarmige Drehmomentstütze ebenfalls an dem Maschinenrahmen ab. Die schnellaufende Abtriebswelle des Getriebes ist über eine doppelgelenkige Kupplung mit der schnellaufenden Welle des Generators verbunden, der wiederum auf einem Rahmen montiert im Maschinengehäuse aufgestellt ist. Zwischen Generator und Getriebe ist zusätzlich eine Bremse installiert. Diese bekannte Windkraftanlage beansprucht verhältnismäßig viel Raum und ist dadurch in der Leistungsfähigkeit beschränkt. Außerdem erfordert die Windkraftanlage einen hohen Montage- und Demontageaufwand.

Aus der WO 96 11338 A ist ein zweistufiges Planetengetriebe für eine Windkraftanlage bekannt, bei der die Rotornabe mit dem Planetenträger der Antriebsstufe lösbar verbunden ist. Der Planetenträger und die mit ihm verbundene Rotornabe sind in zwei Lagern innerhalb des umgebenden Getriebegehäuses gelagert, wobei die Rotornabe gleichzeitig als Innenring des rotorseitigen Lagers dient. Der Außenring des rotorseitigen Lagers ist mit dem Getriebegehäuse verschraubt. Dämmeinsätze zur Schwingungs- und Lärmentkopplung sind an den Verbindungsstellen von Rotornabe und Planetenträger sowie von Getriebegehäuse und Maschinenrahmen vorgesehen. Dieses Planetengetriebe baut verhältnismäßig groß.

In der EP 0 811 764 A1 ist ein einstufiges Planetengetriebe für eine Windkraftanlage beschrieben, dessen Planetenträger lösbar mit der Rotornabe verbunden und innerhalb des Getriebegehäuse gelagert ist. Das Getriebegehäuse und der Generator sind lösbar mit einem Maschinenrahmen verbunden, der von dem an dem Turm befestigten Azimutlager getragen wird.

Der Erfindung liegt die Aufgabe zugrunde, eine Windkraftanlage zu entwickeln, die kompakter baut und gute Installations-, Reparatur- und Wartungseigenschaften aufweist.

Diese Aufgabe wird bei einem gattungsgemäßen Getriebe für eine Windkraftanlage erfindungsgemäß durch die kennzeichnenden Merkmale des Anspruches 1 gelöst. Vorteilhafte Ausgestaltungen der Erfindung sind Gegenstand der Unteransprüche. Durch die Zusammenfassung von Getriebe und Generator zu einem Triebstrangmodul sowie durch die besondere Verbindung dieses Triebstrangmoduls und der Rotornabe mit dem Wälzlager lassen sich die Komponenten in einfacher Weise und in kurzer Zeit auf dem zuvor installierten Rotorträger montieren. Außerdem ist das Triebstrangmodul von dem Rotorträger entkoppelt. Die durch die Windkraft an der Rotornabe, dem Wälzlager und dem Rotorträger auftretenden Kräfte, Momente und Verformungen üben infolge der Entkopplung keinen nachteiligen Einfluß mehr auf das Getriebe und den Generator aus.

Ein Ausführungsbeispiel der Erfindung ist in der Zeichnung dargestellt und wird im folgenden näher erläutert. Es zeigen:

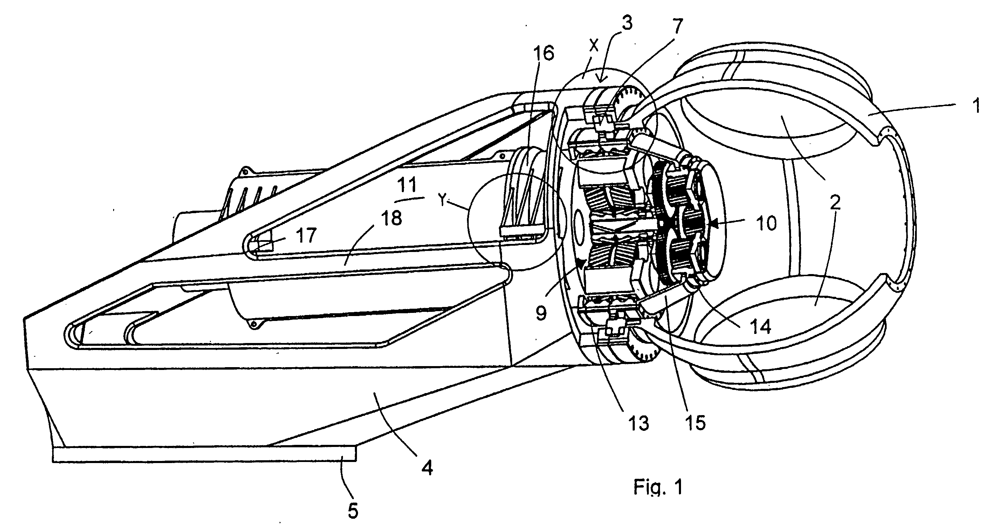

- Fig. 1: eine Windkraftanlage teilweise im Längsschnitt und teilweise in perspektivischer Ansicht,

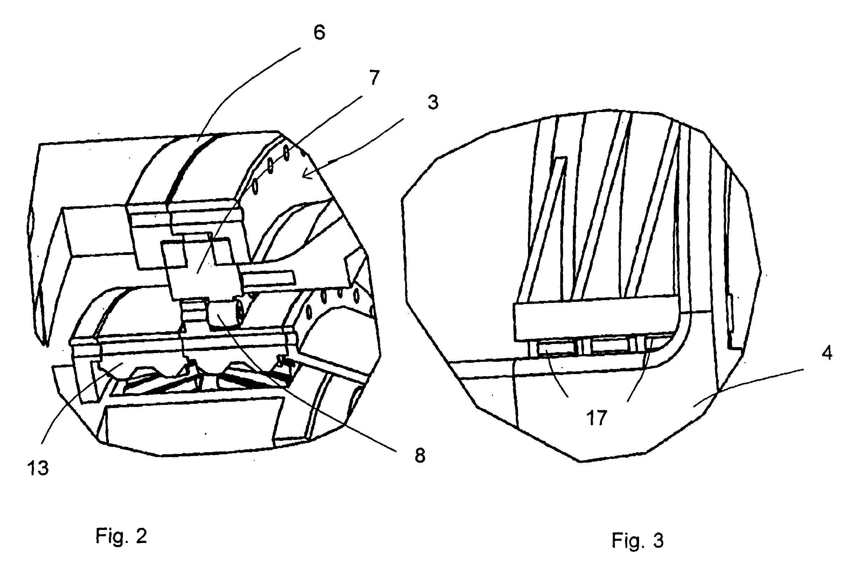

- Fig. 2: die Einzelheit X nach Fig. 1,

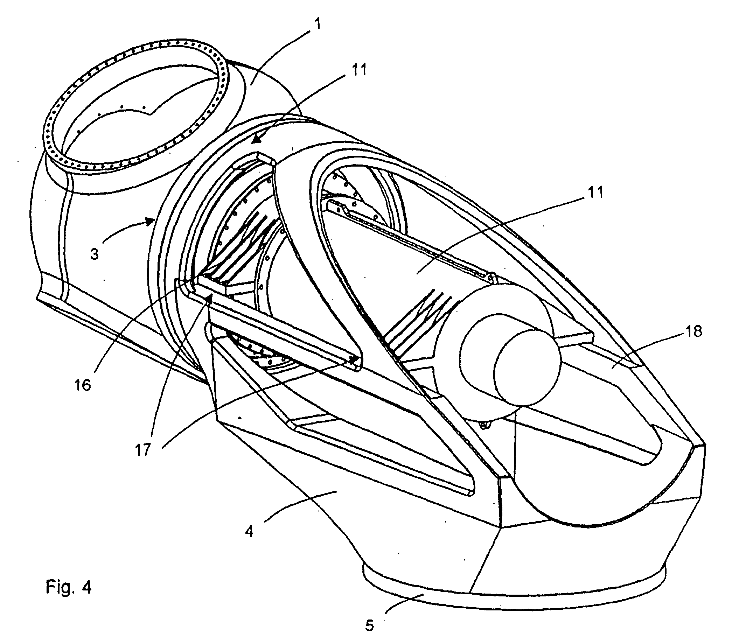

- Fig. 3: die Einzelheit Y nach Fig. 1,

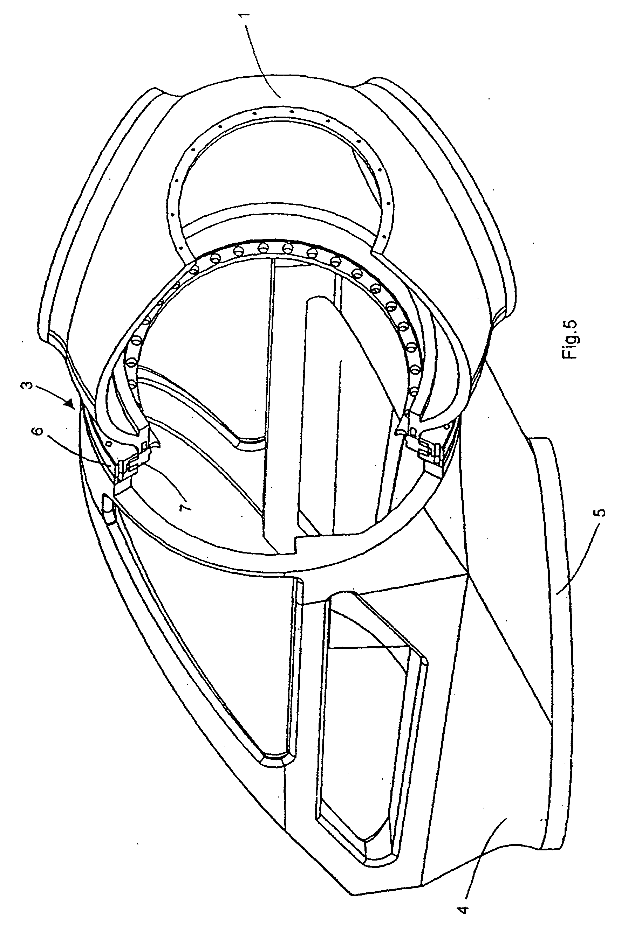

- Fig. 4: den Aufbau des Turmkopfes der Windkraftanlage

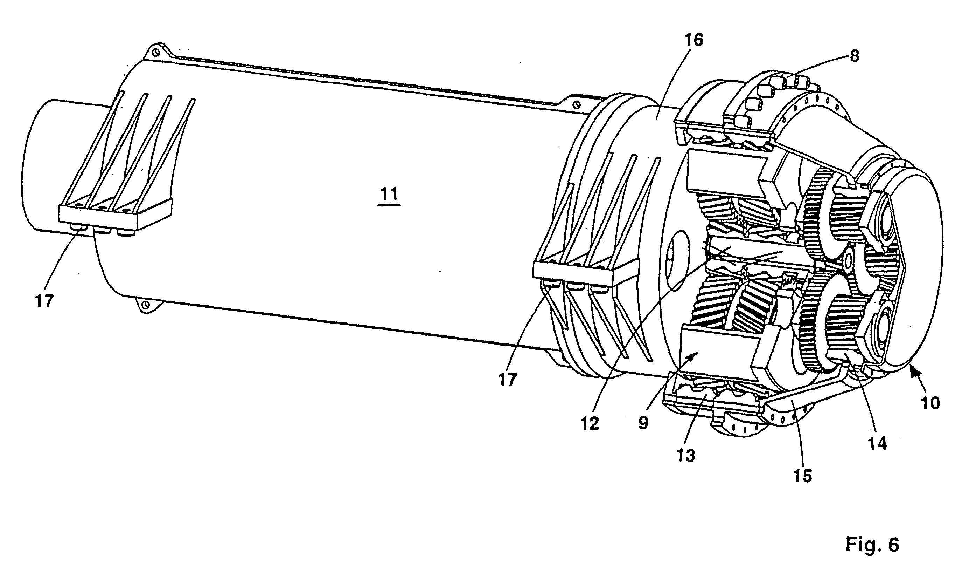

- Fig. 5: den Rotorträger der Windkraftanlage und
- Fig. 6: das Triebstrangmodul der Windkraftanlage in Gesamtdarstellung

Von einem Rotor einer Windkraftanlage ist die Rotornabe 1 mit Aufnahmeöffnungen 2 zur Aufnahme von Rotorblättern gezeigt. Die Rotornabe 1 ist in einem bekannten großen Wälzlager 3 gelagert, das als Axiallager mit Radialführung ausgebildet ist. Das Wälzlager 3 ist auf einem Rotorträger 4 befestigt, der über ein Azimutlager 5 mit einem nicht gezeigten Turm verbunden ist. Die an den Rotorblättern angreifenden Windkräfte werden auf diese Weise direkt in den Turm abgeleitet. An das Azimutlager 5 greift ein Azimutantrieb an, der die Windkraftanlage dem Wind nachführt.

Das Wälzlager 3 weist einen stillstehenden Außenring 6 und einen rotierenden Innenring 7 auf. Der Außenring 6 ist fest mit dem Rotorträger 4 verbunden. An den Innenring 7 ist die Rotornabe 1 angeschraubt. Der Innenring 7 weist eine große Anzahl von Bohrungen zur Aufnahme von vorzugsweise gummierten, schwingungsdämpfend wirkenden Mitnahmebolzen 8 auf.

Die Windkraftanlage enthält weiterhin ein Getriebe, das als zweistufiges Planetengetriebe mit einer Antriebsstufe 9 und einer Abtriebsstufe 10 ausgebildet ist. Derartige Planetengetriebe sind allgemein bekannt und daher nur insoweit dargestellt, wie es zum Verständnis der Erfindung notwendig ist. Das Planetengetriebe enthält in jeder Stufe ein Sonnenrad, mehrere in einem Planetenträger gelagerte Planetenräder und ein Hohlrad, die miteinander kämmen. Das Sonnenrad 12 der Antriebsstufe 9 ist mit dem Planetenträger der Abtriebsstufe 10 verbunden. Die Welle des Sonnenrades 12 der Abtriebsstufe 10 stellt die Abtriebswelle des Getriebes dar. Sie ist über eine Kupplung mit der Welle eines Generators 11 verbunden.

Der Innenring 7 des Wälzlagers 3 ist mit dem Hohlrad 13 der Antriebsstufe 9 über die Mitnahmebolzen 8 verbunden. Die von dem Rotor aufgenommene Leistung wird dadurch an das Planetengetriebe weitergeleitet. Das Hohlrad 13 der Antriebsstufe 9 ist mit dem Hohlrad 14 der Abtriebsstufe 10 zu dem rotierenden Getriebegehäuse 15 des Planetengetriebes verbunden. Über die Verbindung des Hohlrades 13 der Antriebsstufe 9 mit dem Innenring 7 des Wälzlagers 3 ist das Getriebegehäuse 15 ebenso wie die Rotornabe 1 in dem einen Wälzlager 3 der Windkraftanlage gelagert. Der Planetenträger 16 der Antriebsstufe 9 ist auf dem Rotorträger 4 abgestützt und als Drehmomentstütze ausgeführt. Der Planetenträger 16 leitet das Reaktionsmoment aus dem Planetengetriebe in den Rotorträger 4 weiter.

Das Planetengetriebe und der Generator 11 sind zu einem Triebstrangmodul verbunden, indem der Generator 11 an den feststehenden Planetenträger 16 der Antriebsstufe 9 angeschraubt ist. Dieses Triebstrangmodul ist über Schwingungsdämpfer 17 mit dem Rotorträger 4 verbunden. Der Rotorträger 4 ist mit Befestigungsschienen 18 versehen, über die das Triebstrangmodul verschoben werden kann. Durch die Verbindung der Rotornabe 1 mit dem Planetengetriebe über die gummierten Mitnahmebolzen 8 in dem Innenring 7 des Wälzlagers 3 sowie durch die Anbindung von Planetengetriebe und Generator 11 über die Schwingungsdämpfer 17 an den Rotorträger 4 ist eine vollständige dynamische Entkopplung des Triebstrangmoduls von der Windkraftanlage gegeben. Dies führt zu einer Gewichtsreduzierung, da das Triebstrangmodul kleiner ausgeführt werden kann.

Bei der Montage der Windkraftanlage wird zunächst an dem Turm die Rotorträgereinheit bestehend aus dem Rotorträger 4 mit den Befestigungsschienen 18 und dem Wälzlager 3 sowie die Rotornabe 1 installiert. Nach der Installation der Rotorträgereinheit werden die Rotorblätter über einen Kran, der auf dem Rotorträger 4 installiert ist, durch die Öffnungen der Rotornabe 1 hochgezogen und montiert. Desweiteren kann über diesen Kran das Triebstrangmodul bestehend aus dem Planetengetriebe und dem Generator 11 auf den Rotorträger 4 gehoben werden. Zur Reparatur oder Wartung kann das Triebstrangmodul über die Befestigungsschienen 18 aus der Rotornabe 1 bewegt werden und mit Hilfe des Kranes demontiert werden. Durch den modularen Aufbau der Windkraftanlage können das Planetengetriebe, die Planetentgetriebebaugruppen und der Generator 11 einzeln, oder als gesamte Einheit, ebenfalls mit der Unterstützung des installierten Kranes, vom Turm herabgelassen und ausgetauscht werden. Gerade im Offshore-Bereich lassen sich durch einen solchen modularen Aufbau einer Windkraftanlage die Instandhaltungskosten erheblich reduzieren. Desweiteren kann im Schadensfall durch einen Austausch des Triebstrangmoduls die Ausfallzeit der Windkraftanlage beträchtlich gesenkt werden.

## Patentansprüche

1. Windkraftanlage mit einem Rotor, dessen Rotornabe (1) in einem auf einem Rotorträger (4) angeordneten Wälzlager (3) gelagert und mit dem rotierenden Teil eines zweistufigen, eine Antriebsstufe (9) und eine Abtriebsstufe (10) aufweisenden Planetengetriebes lösbar verbunden ist und dessen Ausgangswelle über eine Kupplung an einen Generator (11) gekoppelt ist, wobei das Gehäuse des Generators (11) mit dem Planetengetriebe lösbar zu einem Triebstrangmodul verbunden ist und wobei das Triebstrangmodul auf dem Rotorträger (4) abgestützt und von der Gesamtanlage dynamisch entkoppelt ist, **dadurch gekennzeichnet, daß** der Innenring (7) des Wälzlagers (3) mit der Rotornabe (1) und über schwingungsdämpfend ausgeführte Mitnahmebolzen (8) mit dem Hohlrad (13) der Antriebsstufe (9) des Planetengetriebes lösbar verbunden ist, daß das Hohlrad (13) der Antriebsstufe (9) und das Hohlrad (14) der Abtriebsstufe (10) zu einem rotierenden Getriebegehäuse (15) verbunden sind, daß das Getriebegehäuse (15) in dem Wälzlager (3) gelagert ist und daß der Generator (11) an den feststehenden Planetenträger (16) der Antriebsstufe angeschraubt ist.

2. Windkraftanlage nach Ansprüche 1, **dadurch gekennzeichnet, daß** der Planetenträger (16) der Antriebsstufe (9) auf dem Rotorträger (4) abgestützt ist.

3. Windkraftanlage nach Anspruch 2, **dadurch gekennzeichnet, daß** der Planetenträger (16) der Antriebsstufe (9) als Drehmomentstütze unter Ableitung des Reaktionsmomentes aus dem Planetengetriebe in den Rotorträger (4) ausgeführt ist und daß das Triebstrangmodul über Schwingungsdämpfer (17) auf dem Rotorträger (4) abgestützt ist.

## Claims

1. Wind power plant comprising a rotor, a rotor hub (1) of which is mounted in a shaft bearing (3) arranged on a rotor carrier (4) and detachably connected with the rotating part of a two-stage planetary gear set having a drive stage (9) and a driven stage (10) and the output shaft of which is coupled with the generator (11) by way of a clutch, wherein the casing of the generator (11) is detachably connected with the planetary gear set to form a drive train module and wherein the drive train module is supported on the rotor carrier (4) and dynamically decoupled from the overall plant, **characterised in that** the inner ring (7) of the roller bearing (3) is detachably connected with the rotor hub (1) and by way of entrainer pins (8), which are constructed to damp vibration, with the ring gear (13) of the drive stage (9) of the planetary gear set, that the ring gear (13) of the drive stage (9) and the ring gear (14) of the driven stage (10) are connected to form a rotating gear casing (15), that the gear casing (15) is mounted in the roller bearing (3) and that the generator (11) is screw-connected with the stationary sun wheel (16) of the drive stage.

2. Wind power plant according to claim 1, **characterised in that** the planet carrier (16) of the drive stage (9) is supported on the rotor carrier (4).

3. Wind power plant according to claim 2, **characterised in that** the planet carrier (16) of the drive stage (9) is constructed as a torque support with removal of the reaction moment from the planetary gear set to the rotor carrier (4) and that the drive train module is supported on the rotor carrier (4) by way of vibration dampers (17).

## Revendications

1. Installation éolienne comportant un rotor, dont le moyeu de rotor (1) est monté dans un palier à roulement (3) disposé sur un support de rotor (4) et est relié de manière détachable à la partie tournante d'un engrenage planétaire à deux étages, présentant un étage d'entraînement (9) et un étage de sortie (10) et dont l'arbre de sortie est couplé à une génératrice par l'intermédiaire d'un accouplement, le carter de la génératrice (11) étant relié de manière détachable à l'engrenage planétaire pour former un module de ligne de transmission et le module de ligne de transmission étant soutenu par le support de rotor (4) et étant découplé dynamiquement de l'ensemble de l'installation, **caractérisée en ce que** la bague intérieure (7) du palier à roulement (3) est reliée de manière détachable au moyeu de rotor (1) et, par l'intermédiaire de goujons d'entraînement (8) réalisés de manière à amortir les vibrations, à la couronne (13) de l'étage d'entraînement (9) de l'engrenage planétaire, que la couronne (13) de l'étage d'entraînement (9) et la couronne (14) de l'étage de sortie (10) sont reliées à un carter d'engrenage (15) rotatif, que le carter d'engrenage (15) est monté dans le palier à roulement (3) et que la génératrice (11) est vissée sur le porte-satellite fixe (16) de l'étage d'entraînement.

2. Installation éolienne selon la revendication 1, **caractérisée en ce que** le porte-satellite (16) de l'étage d'entraînement (9) est soutenu sur le support de rotor (4).

3. Installation éolienne selon la revendication 2, **caractérisée en ce que** le porte-satellite (16) de l'étage d'entraînement (9) est réalisé comme appui de couple de torsion en dérivant le couple de réaction de l'engrenage planétaire dans le support de rotor (4) et que le module de ligne de transmission est soutenu par l'intermédiaire d'amortisseurs de vibration (17) sur le support de rotor (4).
